Europäisches Patentamt

(19) European Patent Office

Office européen des brevets

(11) **EP 1 417 428 B1**

(12) **EUROPÄISCHE PATENTSCHRIFT**

(45) Veröffentlichungstag und Bekanntmachung des Hinweises auf die Patenterteilung:
**13.04.2005  Patentblatt 2005/15**

(21) Anmeldenummer: 02767349.0

(22) Anmeldetag: **08.08.2002**

(51) Int Cl.⁷: **F16H 55/08**, F16H 35/00

(86) Internationale Anmeldenummer:
**PCT/EP2002/008897**

(87) Internationale Veröffentlichungsnummer:
**WO 2003/014598 (20.02.2003 Gazette 2003/08)**

(54) **VERZAHNUNGSANORDNUNG**

GEARING ASSEMBLY

DISPOSITIF A ENGRENAGE

(84) Benannte Vertragsstaaten:
**AT BE BG CH CY CZ DE DK EE ES FI FR GB GR IE IT LI LU MC NL PT SE SK TR**

(30) Priorität: **09.08.2001  DE 10139285**

(43) Veröffentlichungstag der Anmeldung:
**12.05.2004  Patentblatt 2004/20**

(73) Patentinhaber:
• **Schapiro, Boris**
**12163 Berlin (DE)**
• **Levitin, Lev**
**Brookline, MA 02446 (US)**
• **Kruk, Naum**
**12307 Berlin (DE)**

(72) Erfinder:
• **Schapiro, Boris**
**12163 Berlin (DE)**
• **Levitin, Lev**
**Brookline, MA 02446 (US)**
• **Kruk, Naum**
**12307 Berlin (DE)**

(74) Vertreter: **Weisse, Jürgen, Dipl.-Phys.**
**Patentanwälte Weisse & Wolgast,**
**Bökenbuschstrasse 41**
**42555 Velbert (DE)**

(56) Entgegenhaltungen:
**DE-C- 80 841          DE-C- 19 920 289**
**GB-A- 19 103 213**

EP 1 417 428 B1

## Beschreibung

### Technisches Gebiet

Die Erfindung betrifft eine Verzahnungsanordnung mit einer feststehenden Verzahnung und einem an der feststehenden Verzahnung mit zwei Zahnleisten abrollenden Zahnrad, wobei das Zahnrad bei seiner Abrollbewegung von der einen Zahnleiste auf die andere Zahnleiste übergeht. Eine derartige Verzahnungsanordnung kann als allgemein bekannt gelten.

### Stand der Technik

Bei vielen mechanischen Konstruktionsaufgaben tritt das Problem auf, die Achse eines einer Zahnleiste abrollenden Zahnrades oder ein damit verbundenes Konsnuktionselement entlang einer Trajektorie mit einem oder mehreren Knickpunkten zu bewegen. In den Knickpunkten ist die Trajektorie zwar stetig, es tritt aber ein Tangentensprung auf. Ein Beispiel einer solchen Trajektorie ist ein von zwei gegensinnig gekrümmten Kreisbögen gebildetes Zweieck.

Ein solches Problem tritt beispielsweise auf bei einer Rotationskolbenmaschine, wie sie in der DE 199 20 289 C1 beschrieben ist. Dort ist in einer Kammer, deren Querschnitt ein Oval dritter Ordnung bildet, ein Rotationskolben beweglich, dessen Querschnitt ein Oval zweiter Ordnung ist. Zum Abgreifen der Bewegung des Rotationskolbens dient eine sich zentral durch die Kammer erstreckende Abtriebswelle. Die Abtriebswelle ragt durch einen ovalen Durchbruch des Rotationskolbens und trägt ein Ritzel. Das Ritzel ist in Eingriff mit einer Verzahnung auf der Innenseite des Durchbruchs. Die Achse der Abtriebswelle und damit des Ritzels durchläuft bei den Bewegungen des Rotationskolbens relativ zu dem Rotationskolben eine Trajektorie in Form eines Zweiecks. Es bietet Probleme, die Verzahnung so auszubilden, daß das Ritzel in den Punkten, wo die Achse des Ritzels sich durch die Knickpunkte der Trajektorie bewegt, nicht klemmt.

Das Problem, ein Zahnrad an einer Verzahnung so zu führen, daß seine Achse eine Trajektorie mit Knickpunkten durchläuft, wurde bisher nicht gelöst.

In dem Buch von I. I. Artobolevskij "Mechanismen in der modernen Technik" Band III, Verlag Nauka, Moskau 1973 wurden Lösungen beschrieben, bei denen versucht wird, das geschilderte Problem zu umgehen. Dabei werden die kritischen Stellen mit dem Tangentensprung durch stetige und glatte Verzahnungsstrecken ersetzt. Ein anderer Versuch bestand darin, das Abrollen an den kritischen Stellen zu unterbrechen. Es wurden auch nicht-rotationssymmetrische Zahnräder oder andere, dem konkreten Fall speziell angepaßte Mechanismen benutzt.

## Offenbarung der Erfindung

Der Erfindung liegt die Aufgabe zugrunde, eine Verzahnungsanordnung der vorliegenden Art zu schaffen, bei welcher die Achse eines an den Zahnleisten abrollenden Zahnrades ohne zu klemmen eine Trajektorie mit einem Knickpunkt durchlaufen kann.

Erfindungsgemäß wird diese Aufgabe durch die Merkmale des Anspruchs 1 gelöst.

Das Zahnrad rollt dann zunächst an der einen Zahnleiste ab. Seine Achse bewegt sich längs eines Armes der Trajektorie bis zu dem Knickpunkt. Von hier aus müßte das Zahnrad an der anderen Zahnleiste abrollen, derart, daß die Achse des Zahnrads über den Knickpunkt längs eines anderen Armes der Trajektorie bewegt wird. Der Übergang von der einen Zahnleiste zur anderen muß einerseits momentan geschehen. Andererseits darf keine Klemmung eintreten. Eine solche Klemmung erfolgt, wenn die Verzahnung im Bereich des Knickpunktes glatt durchgehend verläuft. Dann müßte nämlich die Verzahnung zwischen den beiden Zahnleisten an den Umfang des Zahnrades angepaßt sein. Ist der Krümmungsradius des Teilkreises der "Übergangsverzahnung" zwischen den Zahnleisten kleiner als der Radius des Zahnrades, dann kann das Zahnrad nicht über diese Übergangsverzahnung abrollen und klemmt. Ist der Krümmungsradius des Teilkreises der Übergangsverzahnung größer als der Radius des Zahnrades, dann erfolgt kein momentaner Übergang von der einen Zahnleiste zur anderen. Die Achse des Zahnrades bewegt sich beim Abrollen an der Übergangsverzahnung auf einem Kreisbogen. Es entsteht kein Knickpunkt. Sind die Teilkreise von Übergangsverzahnung und Zahnrad bei glattem Anschluß gleich, dann kann das Zahnrad im Bereich der Übergangsverzahnung nicht abrollen. Die Erfindung sieht daher einen nichtglatten Übergang zwischen den Zahnleisten und der Übergangsverzahnung vor. Dann läßt sich erreichen, daß das Zahnrad unmittelbar nach Verlassen der einen Zahnleiste wieder mit der anderen Zahnleiste in Eingriff kommt. Die nicht glatt anschließende und vorzugsweise unter Bildung von Lücken angeordnete Übergangsverzahnung stellt sicher, daß stets ein Eingriff zwischen abrollendem Zahnrad und feststehender Verzahnung gewährleistet ist. Erst ist das Zahnrad mit der einen Zahnleiste und der Übergangsverzahnung in Eingriff. Im nächsten Augenblick ist das Zahnrad in Eingriff mit der Übergangsverzahnung und der anderen Zahnleiste. Es erfolgt somit bei laufendem Aufrechterhalten des Eingriffs ein momentaner Übergang von einer Zahnleiste zur anderen. Die Trajektorie hat einen Knickpunkt.

Zwischen den beiden Zahnleisten ist eine Aussparung gebildet, die den gleichzeitigen Kontakt des Zahnrades mit beiden Zahnleisten ausschließt. Die Überleitungsverzahnung kann von einem zu dem abrollenden Zahnrad konvexen Zahnbogen gebildet sein. In diesem Fall weist vorteilhafterweise das Zahnrad einen Teilkreis auf, der mit den Teilkurven der beiden Zahnleisten je eine gemeinsame Tangente besitzt, wenn sich die Achse des Zahnrades im Knickpunkt der Trajektorie befindet, und der konvexe Zahnbogen besitzt einen Teilkreis, der mit dem Teilkreis des Zahnrades eine gemeinsame Tangente besitzt. Die Überleitungsverzahnung kann aber auch eine lineare Zahnleiste sein. Eine lineare Zahnleiste kann man als konvexe Zahnleiste mit dem Krümmungsradius unendlich ansehen. Das Zahnrad löst in Eingriff mit der Überleitungsverzahnung den Eingriff mit der einen Zahnleiste unmittelbar bevor es in die andere Zahnleiste eingreift. Die Teilkurven der beiden Zahnleisten können konkav-bogenförmig sein.

Ausführungsbeispiele der Erfindung sind nachstehend unter Bezugnahme auf die zugehörigen Zeichnungen näher erläutert.

## Kurze Beschreibung der Zeichnungen

Fig.1    zeigt ein Zahnrad beim Übergang vom Eingriff mit einer ersten bogenförmigen Zahnleiste zum Eingriff mit einer zweiten bogenförmigen Zahnleiste, wobei das Zahnrad im Eingriff mit einer Übergangsverzahnung ist und mit der ersten Zahnleiste gerade nicht mehr und mit der zweiten Zahnleiste gerade noch nicht in Eingriff ist.

Fig.2    zeigt die Verzahnungsanordnung von Fig.1, nachdem sich das Zahnrad zum Eingriff mit der zweiten Zahnleiste weiter bewegt hat.

Fig.3    zeigt in vergrößertem Maßstab eine lineare Übergangsverzahnung mit den Enden der Zahnleisten.

Fig.4    zeigt eine konvexen Übergangsverzahnung in ähnlicher Darstellung wie Fig.3.

Fig.5    zeigt eine Verzahnungsanordnung mit konvexer Übergangsverzahnung und die von der Achse des Zahnrades durchlaufene Trajektorie mit Knickpunkt.

Fig.6    ist ein Vektordiagramm für die Geschwindigkeit der Achse des Zahnrades beim Passieren des Knickpunktes der Trajektorie.

## Bevorzugte Ausführungsbeispiele der Erfindung

Im folgenden wird die Erfindung anhand einer singulären Trajektorie mit kreisförmigen Bahnen in der unmittelbaren Umgebung des Knickpunktes beschrieben. Die Gültigkeit der Erfindung ist aber darauf natürlich nicht beschränkt.

In den Figuren ist mit 10 ein Zahnrad bezeichnet. Das Zahnrad 10 soll an einer Verzahnung, die generell mit 12 bezeichnet ist, so abrollen, daß seine Achse A eine singuläre Trajektorie 14 durchläuft. Die Trajektorie 14 besteht aus zwei Kreisbögen 16 und 18, die einen Knickpunkt 20 bilden. Der Kreisbogen 16 ist um einen Krümmungsmittelpunkt 22 gekrümmt. Der Kreisbogen 18 ist um einen Krümmungsmittelpunkt 24 gekrümmt.

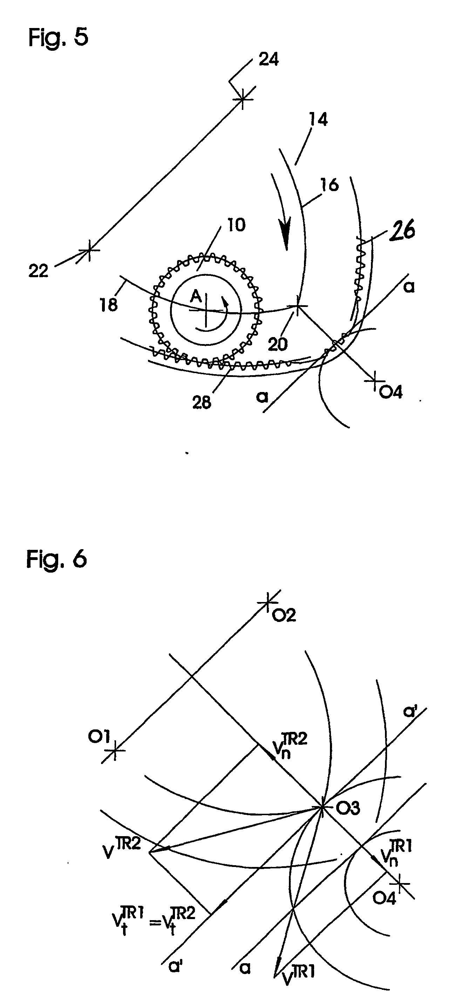

Zu diesem Zweck weist die Verzahnung 12 zwei konkav gekrümmte Zahnleisten 26 und 28 auf. Die Zahnleiste 26 ist um den Krümmungsmittelpunkt 22 gekrümmt. Ihr Teilkreisradius ist um den Teilkreisradius des Zahnrades 10 größer als der Krümmungsradius des Kreisbogens 16. Die Zahnleiste 28 ist um den Krümmungsmittelpunkt 24 gekrümmt. Ihr Teilkreisradius ist um den Teilkreisradius des Zahnrades 10 größer als der Krümmungsradius des Kreisbogens 18. Wenn das Zahnrad 10 an der Zahnleiste 26 abrollt, dann durchläuft die Achse A des Zahnrades den Kreisbogen 16 bis zu dem Knickpunkt 20. Wenn das Zahnrad 10 an dem Kreisbogen 18 abrollt, dann durchläuft die Achse A des Zahnrades den Kreisbogen 18 von dem Knickpunkt 20 nach links oben in Fig.5.

Das Problem ist der Übergang von der Zahnleiste 26 zu der Zahnleiste 28.

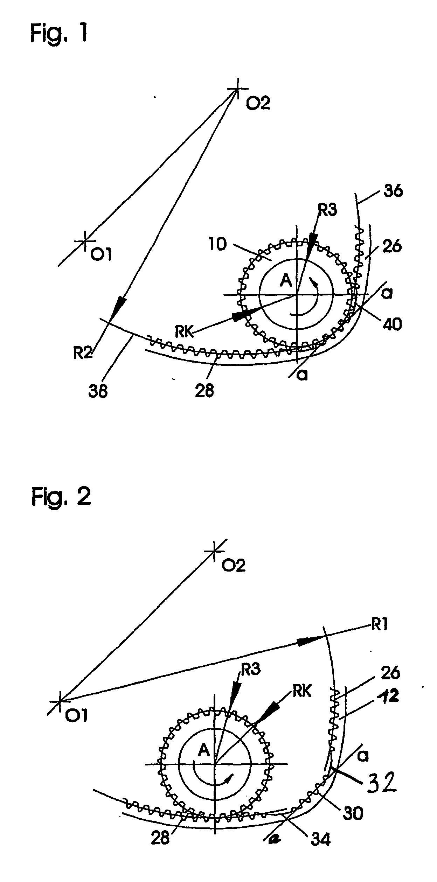

Wie in Fig.1 und 2 dargestellt ist, ist zwischen den Enden der Zahnleisten 26 und 28 eine Lücke. In dieser Lücke sitzt eine lineare "Übergangsverzahnung" 30, die in den Ansprüchen als Überleitungsverzahnung bezeichnet ist. Zwischen der Zahnleiste 26 und der linearen Übergangsverzahnung 30 ist eine Lücke 32. Ebenfalls ist eine Lücke 34 zwischen der Zahnleiste 28 und der linearen Übergangsverzahnung 30.

Aus Fig. 1 ist ersichtlich, daß in der dem Knickpunkt entsprechenden Position des Zahnrades 10 die Teilkreise 36 und 38 (in den Ansprüchen Teilkurven benannt) der Zahnleisten 26 und 28 sich glatt an den Teilkreis 40 des Zahnrades 10 anschließen. Die Verzahnung zwischen den Zahnleisten 26 und 28 folgt aber, wie beschrieben, nicht diesem Teilkreis 40 sondern bildet eine lineare Zahnleiste oder Übergangsverzahnung 30. Die Teillime a - a dieser linearen Übergangsverzahnung 30 entspricht der Tangente an den Teilkreis 40 des Zahnrades 10.

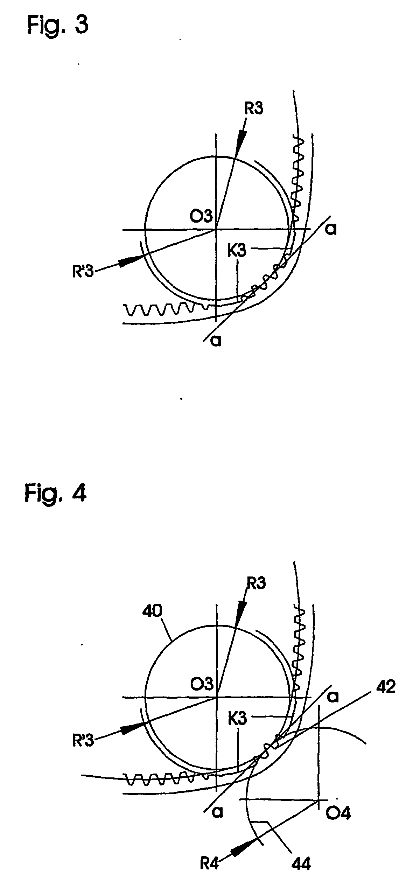

Aus Fig.1 erkennt man, daß in der "Knickpunkt"-Position das Zahnrad im Mittelbereich mit der Übergangsverzahnung 30 in Eingriff ist. Das Zahnrad 10 ist mit der Zahnleiste 26 gerade nicht mehr in Eingriff. Mit der Zahnleiste 28 ist das Zahnrad 10 gerade noch nicht in Eingriff. Unmittelbar vorher bestand noch der Eingriff in die Zahnleiste 26, unmittelbar danach wird das Zahnrad 10 in die Zahnleiste 28 eingreifen. Es erfolgt also ein momentaner Wechsel von der Zahnleiste 26 zu der Zahnleiste 28. Die Trajektorie 14 der Achse A hat einen echten Knickpunkt mit einem Tangentensprung. Da die Übergangsverzahnung 30 linear ist, also nicht um das Zahnrad 10 "herumgebogen", tritt keine Klemmung ein. Fig.3 ist eine vergrößerte Darstellung und läßt die Abweichung der Teillinie a - a der Übergangsverzahnung 30 von dem Teilkreis des Zahnrades 10 deutlicher erkennen.

Die beschriebene Verzahnungsanordnung gestattet somit einen klemmfreien und momentanen Übergang des Zahnrades 10 von einer Zahnleiste 26 zur anderen Zahnleiste 28, so daß von der Achse A eine Trajektorie 14 mit Knickpunkt 20 durchlaufen wird. Dabei ist aber in jedem Augenblick über einen Zahneingriff eine Antriebsverbindung zwischen Zahnrad 10 und Verzahnung 12 und die Übertragung von Drehmomenten gewährleistet.

Fig.4 zeigt eine Verzahnungsanordnung ähnlich wie Fig.1 bis 3. Entsprechende Teile sind mit den gleichen Bezugszeichen versehen wie dort. Bei der Verzahnungsanordnung von Fig.4 ist statt einer linearen Übergangsverzahnung eine konvexe Übergangsverzahnung 42 vorgesehen. Die Übergangsverzahnung 42 hat einen Teilkreis 44. Der Teilkreis 40 des Zahnrades 10 in dessen "Knickpunkt"-Position hat mit dem Teilkreis 44 eine gemeinsame Tangente a - a. Die Tangente a - a ist vorzugsweise parallel zu der Verbindung der Krümmungsmittelpunkte 22 und 24.

Im Extremfall ist es möglich, daß die Überleitungsverzahnung aus einem einzigen Zahn besteht. Es ist u.U. auch möglich, daß die Übergangsverzahnung konkav ist, wenn sie einen hinreichend großen Krümmungsradius besitzt.

Die Physik der Achsenführung eines abrollenden Zahnrades um den Knickpunkt 20 der Trajektorie wird im wesentlichen dadurch bestimmt, daß die Bahn der Achse oder des Masseschwerpunktes des Zahnrades im Knickpunkt 20 stetig bleibt, während seine Geschwindigkeit ihre Richtung sprunghaft ändert.

Die Verhältnisse sind in Fig.6 dargestellt.

Wenn man Reibungsverluste und andere dynamische Effekte vernachlässigt, dann springt die Geschwindigkeit der Achse A unmittelbar vor dem Knickpunkt 20, nämlich $V^{TR1}$, auf die Geschwindigkeit der Achse unmittelbar nach dem Knickpunkt $V^{TR2}$. Die zu der Linie a - a parallele Komponente der Geschwindigkeit vor dem Sprung $V_l^{TR1}$ ist gleich der entsprechenden Komponente nach dem Sprung $V_l^{TR2}$. Die zu der Linie a - a senkrechte Komponente der Geschwindigkeit vor dem Sprung $V_n^{TR1}$ verändert sich sprunghaft zur entgegengesetzten Komponente unmittelbar nach dem Knickpunkt $V_n^{TR2}$. Es ist

$$V_n^{TR1} = -V_n^{TR2}$$

Damit ist das Passieren der Achse A des Zahnrades 10 durch den Knickpunkt äquivalent der Spiegelreflexion des Masseschwerpunktes an der Linie a - a.

**Patentansprüche**

1. Verzahnungsanordnung mit einer feststehenden Verzahnung und einem an der feststehenden Verzahnung mit zwei Zahnleisten (26,28) abrollenden Zahnrad (10), wobei das Zahnrad (10) bei seiner Abrollbewegung von der einen Zahnleiste (26) auf die andere Zahnleiste (28) übergeht, **dadurch gekennzeichnet, daß** zur Erzeugung einer in einem Knickpunkt (20) einen Tangentensprung aufweisenden Trajektorie (14) der Achse (A) des abrollenden Zahnrades (10) beim Übergang von einer Zahnleiste auf die andere zwischen den Zahnleisten (26,28) eine Überleitungsverzahnung (30;42) vorgesehen ist, die zu den Zahnleisten (26,28) nicht-glatt verläuft, wobei jede Zahnleiste (26, 28) eine Teilkurve (36, 38) aufweist.

2. Verzahnungsanordnung nach Anspruch 1, **dadurch gekennzeichnet, daß** zwischen den beiden Zahnleisten (26,28) eine Aussparung gebildet ist, die den gleichzeitigen Kontakt des Zahnrades (10) mit beiden Zahnleisten (26,28) ausschließt.

3. Verzahnungsanordnung nach Anspruch 2, **dadurch gekennzeichnet, daß** die Überleitungsverzahnung von einem zu dem abrollenden Zahnrad (10) konvexen Zahnbogen (42) gebildet ist.

4. Verzahnungsanordnung nach Anspruch 3, **dadurch gekennzeichnet, daß**

   (a) das Zahnrad (10) einen Teilkreis (40) aufweist, der mit den Teilkurven (36,38) der beiden Zahnleisten (26,28) je eine gemeinsame Tangente aufweist, wenn sich die Achse (A) des Zahnrades (10) im Knickpunkt (20) der Trajektorie (14) befindet, und
   (b) der konvexe Zahnbogen (42) einen Teilkreis (44) besitzt, der mit dem Teilkreis (40) des Zahnrades (10) eine gemeinsame Tangente (a - a) besitzt.

5. Verzahnungsanordnung nach Anspruch 2, **dadurch gekennzeichnet, daß** die Überleitungsverzahnung eine lineare Zahnleiste (30) ist.

6. Verzahnungsanordnung nach Anspruch 2, **dadurch gekennzeichnet, daß** die Überleitungsverzahnung aus einem einzigen Zahn besteht.

7. Verzahnungsanordnung nach einem der Ansprüche 1 bis 6, **dadurch gekennzeichnet, daß** das Zahnrad (10) in Eingriff mit der Überleitungsverzahnung (30) den Eingriff mit der einen Zahnleiste (26) löst unmittelbar bevor es in die andere Zahnleiste (28) eingreift.

8. Verzahnungsanordnung nach einem der Ansprüche 1 bis 7, **dadurch gekennzeichnet, daß** die Teilkurven (36,38) der beiden Zahnleisten (26,28) konkav-bogenförmig sind.

**Claims**

1. Toothing assembly having a stationary toothing and a gear (10) arranged to roll along the stationary toothing with two toothed racks (26,28) and to pass, during its rolling motion, from one of the toothed racks (26) to the other toothed rack (28), **characterised in that** a change-over toothing is provided between the toothed rack means, the change-over toothing (30:42) extending non-smoothly with respect to the toothed racks (26,28) to generate a trajectory (14) of the axis (A) of the rolling gear (10), the trajectory having a discontinuity of its tangent in a salient point (20), each toothed rack having a reference curve (36,38).

2. Toothing assembly as claimed in claim 1, **characterised in that** a relief is provided between the two toothed racks (26,28) to prevent simultaneous contact of the gear (10) with the two toothed racks (26,28).

3. Toothing assembly as claimed in claim 2, **characterised in that** the change-over toothing is a toothed arc (42) convex towards the gear.

4. Toothing assembly as claimed in claim 3, **characterised in that**

   (a) the gear (10) defines a reference circle (40), which has common tangents with the reference curves (36,38) of the two toothed racks (26,28), when the axis (A) of the gear is in the salient point (20) of the trajectory, and

   (b) the convex toothed arc (42) defines a further reference circle (44), which has a tangent (a - a) in common with the reference circle(40) of the gear (10).

5. Toothing assembly as claimed in claim 2, **characterised in that** the change-over toothing means is a linear toothed rack.

6. Toothing assembly as claimed in claim 2, **characterised in that** the change-over toothing consists of one single tooth.

7. Toothing assembly as claimed in claim 1,**characterised in that** the gear (10), when engaging the change-over toothing (30) is arranged to leave the engagement with one of the toothed racks (26) immediately before it engages the other one of the toothed rack (28).

8. Toothing assembly as claimed in claim 1, **characterised in that** the reference curves (36,38) of the two toothed racks (26,28) are concave-arcuate.

**Revendications**

1. Disposition d'engrenage présentant un engrenage fixe et une roue dentée (10) se déplaçant sur l'engrenage fixe muni de deux crémaillères (26,28), la roue dentée (10) passant d'une crémaillère (26) à l'autre (28) lorsqu'elle se déplace, **caractérisée en ce que**, pour produire une trajectoire (14) de l'axe (A) de la roue dentée (10) en mouvement qui présente en un point d'inflexion (20) une discontinuité de tangente lors du passage d'une crémaillère à l'autre, il est prévu entre les crémaillères (26,28) un engrenage de transition (30;42) qui ne relie pas les crémaillères (26,28) de façon plane, chaque crémaillère (26,28) présentant une courbe primitive (36,38).

2. Disposition d'engrenage selon la revendication 1, **caractérisée en ce qu'**un évidement empêchant le contact simultané de la roue dentée (10) avec les deux crémaillères (26,28) est formé entre les deux crémaillères (26,28).

3. Disposition d'engrenage selon la revendication 2, **caractérisée en ce que** l'engrenage de transition est formé par un secteur denté (42) convexe par rapport à la roue dentée (10) en mouvement.

4. Disposition d'engrenage selon la revendication 3, **caractérisée en ce que**

   (a) la roue dentée (10) présente un cercle primitif (40) présentant avec les courbes primitives (36,38) des deux crémaillères (26,28) à chaque fois une tangente commune lorsque l'axe (A) de la roue dentée (10) se trouve au point d'inflexion (20) de la trajectoire (14), et
   (b) le secteur denté convexe (42) possède un cercle primitif (44) possédant avec le cercle primitif (40) de la roue dentée (10) une tangente commune (a-a).

5. Disposition d'engrenage selon la revendication 2, **caractérisée en ce que** l'engrenage de transition est une crémaillère droite (30).

6. Disposition d'engrenage selon la revendication 2, **caractérisée en ce que** l'engrenage de transition se compose d'une seule dent.

7. Disposition d'engrenage selon l'une quelconque des revendications 1 à 6, **caractérisée en ce qu'**en s'engrenant dans l'engrenage de transition (30), la roue dentée (10) déclenche l'engrènement dans l'une des crémaillères (26) juste avant de s'engrener dans l'autre crémaillère (28).

8. Disposition d'engrenage selon l'une quelconque des revendications 1 à 7, **caractérisée en ce que** les courbes primitives (36,38) des deux crémaillères (26,28) sont en forme d'arc concave.

## Fig. 1

## Fig. 2

Fig. 3

R3

O3

a

R'3

K3

a

Fig. 4

R3

40

O3

a

42

R'3

K3

a

O4

R4

44

**Fig. 5**

**Fig. 6**